# EUROPEAN PATENT SPECIFICATION

(11) **EP 1 397 584 B1**
(45) Date of publication and mention of the grant of the patent: **12.01.2005**
(21) Application number: 02733694.0
(22) Date of filing: 16.05.2002
(51) Int. Cl.: F02C 7/32, F01D 15/10

(54) **GAS TURBINE ARRANGEMENT**
GASTURBINENANORDNUNG
MECANISME DE TURBINE A GAZ

(30) Priority: 05.06.2001 SE 0102002
(43) Date of publication of application: 17.03.2004
(73) Proprietor: Volvo Aero Corporation, 46181 Trollhättan (SE)
(72) Inventor: JÖNSSON, Bertil, S-237 32 Bjärred (SE)
(74) Representative: Fröhling, Werner
(86) International application number: PCT/SE2002/000935
(87) International publication number: WO 2002/099263

(56) References cited:
- EP-A2- 1 050 672
- GB-A- 707 357
- GB-A- 820 605
- US-A- 4 640 153
- PATENT ABSTRACTS OF JAPAN & JP 11 351 331 A (NISSAN MOTOR) 24 December 1999

## Description

### BACKGROUND OF THE INVENTION:

The present invention relates to a gas turbine arrangement comprising a transmission of planetary gear type with fixed planet carrier, and an arrangement for driving one or more auxiliary units. The main components of a conventional gas turbine arrangement are the gas turbine engine, the transmission and the generator, the gas turbine engine usually comprising a compressor, a combustion chamber and a turbine. Forming part of the transmission is a main gear, the function of which is to reduce the high speed of the gas turbine engine to a suitable generator speed. The main transmission is often of the planetary gear type with fixed planet carrier (so-called "star gear" type), which gives good efficiency and makes for a compact construction. Gas turbine arrangements of the aforementioned type are used, for example, for generating electricity in power stations and for powering vehicles, aircraft and vessels. A gas turbine arrangement also comprises a number of auxiliary units, such as oil pump, fuel pump, starter motor, rotary oil separator and compressors, all of which must be driven in some way.

The invention will be described below with reference to use in a gas turbine arrangement for driving a generator. This is an advantageous application but in no way limits the invention.

### DESCRIPTION OF THE STATE OF THE ART:

In the case of single-shaft gas turbines, auxiliary units are conventionally driven from toothed gears, which are driven by a gear wheel of the main gear. Due to the large speed differences between toothed gears of the main gear and the speeds which are suitable for most auxiliary units, and also to the limited space available, these auxiliary unit gears usually consist of a relatively complicated system of multiple toothed gears with associated parts of bearings and bearing housings. Together with components of the main gear this auxiliary unit transmission constitutes the common transmission. An auxiliary unit drive arranged in this way makes the design construction of the transmission significantly more complex than the main transmission itself, which in turn makes the transmission as a whole relatively expensive to manufacture.

Gaz turbine engines having planetary gearing for driving auxiliary devices are known from prior art documents GB-A-820 605 and US-A-4 640 153.

### SUMMARY OF THE INVENTION:

The object of the present invention is to provide an auxiliary unit drive for gas turbine arrangements which makes possible a less complicated transmission design construction than in the state of the art. This object is achieved by means of an arrangement, the characteristic features of which are set forth in claim 1. Subsequent claims describe advantageous developments and variants of the invention.

The invention consists of a gas turbine arrangement comprising a transmission of planetary gear type with fixed planet carrier, and an arrangement for driving one or more auxiliary units. The invention is characterized in that at least one of the said auxiliary units is operatively connected to a planet wheel shaft forming part of the transmission. The auxiliary unit can thereby be driven from the planet wheel shaft rather than by way of the auxiliary unit transmission, which makes it possible to reduce the number of toothed gears in the transmission for driving the auxiliary unit. Since more than one auxiliary unit can be driven from the planet wheel shafts, the present invention makes it possible to completely eliminate the auxiliary unit transmission but still use the transmission, that is to say the planet wheel shafts, to drive auxiliary units. This is a great technical advantage even though it may mean, for example, that an extra toothed gear is needed in the operative connection between auxiliary unit and planet wheel shaft. The arrangement means that the transmission as a whole can be simplified and thereby manufactured more cost effectively. An auxiliary unit of a design construction that lends itself to operation at a relatively high speed is suitably used.

In a preferred embodiment of the invention the auxiliary unit connected to the said planet wheel shaft is connected directly to the said planet wheel shaft. The rotary component of the said auxiliary unit suitably constitutes a form of extension of the planet wheel shaft. In this way the auxiliary unit can be driven directly from the planet wheel shaft, which means that the drive can be provided using components already forming part of the main transmission. In other words, no further toothed gears or bearings are required in order to drive the auxiliary unit. Since a plurality of planet wheel shafts is available and since a planet wheel shaft can drive more than one auxiliary unit, a plurality of auxiliary units can be driven without the need for any additional toothed gears or bearings other than those which already form part of the main transmission. This embodiment therefore affords great scope for simplifying the transmission, thereby making its manufacture more cost-effective.

The auxiliary unit connected to the said planet wheel shaft is preferably built into the transmission. The auxiliary unit connected to the said planet wheel shaft may furthermore be an oil pump or a rotary oil separator. These auxiliary units are especially suited to being driven directly from the planet wheel shafts of the main transmission. The oil pump is usually relatively small and a type of pump which is suitable for the relative high speed of the planet wheel may be used, such as a pump of the "gerotor" type. The rotary oil separator (where used) is also well suited to the speed of the planet wheel and can easily be modified in size to achieve efficient functioning. There are furthermore a number of advantages attached to building the oil pump and the rotary oil separator into the transmission, such as a lesser need for external piping and a reduced risk of leakage.

Other auxiliary units that are not driven from the transmission are suitably fitted outside the transmission and may, for example, be driven by electric motor. In this way the auxiliary units that are advantageously driven from the transmission, whether they are built-in or not, may be driven by components of the main transmission, thereby obviating the need for further toothed gears and bearings other than those of the main transmission. This permits a comparatively simple transmission design, making it cost-effective to manufacture.

### BRIEF DESCRIPTION OF THE DRAWINGS:

The invention will be further described below with reference to the following figures, in which:
- Figure 1: shows a diagram of the main components in an example of a conventional gas turbine arrangement,
- Figure 2: shows a diagrammatic sectional view of a main transmission of planetary gear type where the invention is applied according to a preferred embodiment, and
- Figure 3: shows a more detailed view of the preferred embodiment of the invention.

### DESCRIPTION OF THE PREFERRED EMBODIMENTS:

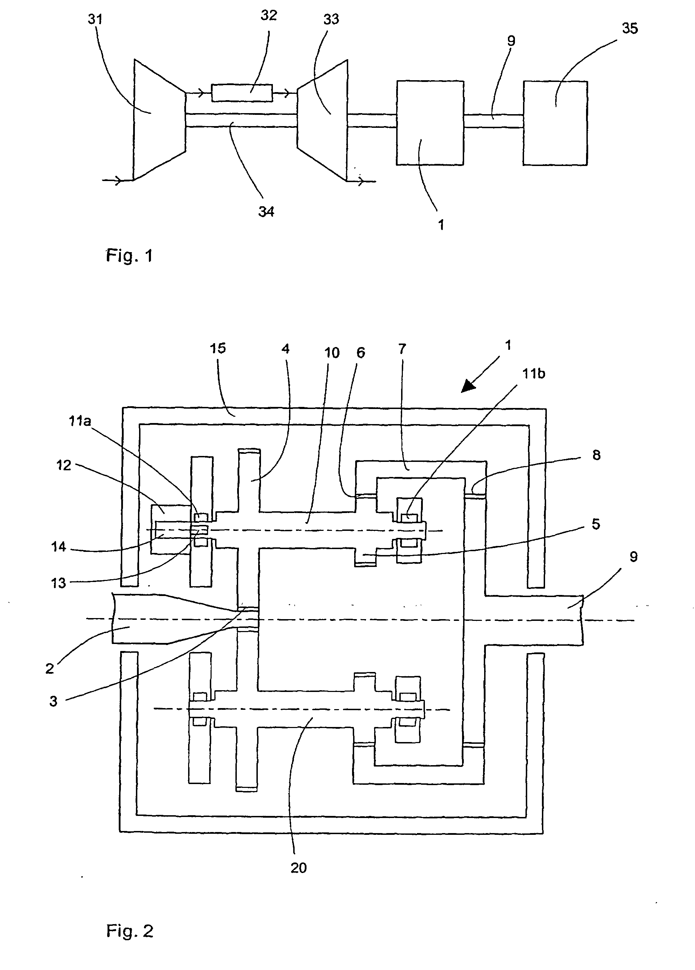

Figure 1 shows a diagram of the main components in an example of a conventional gas turbine arrangement. Fuel and air are led, via a compressor 31, into a combustion chamber 32, in which combustion takes place. The exhaust gases are led to a turbine 33, which is driven to rotate by the expansion of the exhaust gases. The turbine 33 drives a driveshaft 34, which drives the compressor 31 and extends further into a transmission 1. A shaft 9 emerging from the transmission drives a generator 35. As already stated, the transmission 1 according to conventional technology comprises a main transmission and an auxiliary unit transmission.

Figure 2 shows a simplified diagram of a main transmission of planetary gear type with fixed planet carrier in which the invention has been applied in a preferred embodiment. An input shaft 2 to the transmission 1 (i.e. the drive shaft 34 of the gas turbine engine in figure 1) is connected by way of toothed gears 3 to a larger planet wheel 4. A smaller planet wheel 5 is connected by way of toothed gears 6 to an internal gear 7, which by way of toothed gears 8 drives an output shaft 9 from the transmission 1, the output shaft being connected, for example to a generator (not shown). The larger planet wheel 4 and the smaller planet wheel 5 are seated on one and the same planet wheel shaft 10, the planet wheel shaft 10 being suspended in two bearings 11a, 11b. An auxiliary unit 12, such as an oil pump, is directly connected to the planet wheel shaft 10 by a connecting element 13, for example a bolt A rotary component 14 in the auxiliary unit 12 is indicated by a dashed line. The rotary component 14 in the auxiliary unit 12 therefore constitutes a form of extension of the planet wheel shaft 10, so that no additional toothed gears or bearings are required in order to drive the auxiliary unit 12 other than the bearings 11a, 11b, which still form part of the suspension of the planet wheel shaft 10.

The fact that the planet wheel shaft 10 is provided with two planet wheels 4, 5 has to do with the gear ratio of the main gear. The invention can naturally also be applied even if the planet wheel shaft 10 is provided with only one planet wheel.

Figure 2 is primarily intended to show the principle of how the auxiliary unit 12 according to the preferred embodiment can be connected directly to the planet wheel shaft 10, that is to say in such a way that there is no need for further toothed gears and bearings other than those of the main gear. Otherwise the auxiliary unit 12 and peripheral arrangement such as ducts and other connections can be designed in various ways.

The auxiliary unit 12 in figure 2 is built into the transmission 1, that is to say the auxiliary unit 12 is arranged inside the casing 15 of the transmission 1. Alternatively, the auxiliary unit 12 may be arranged outside the casing 15 of the transmission 1, for example by making the planet wheel shaft 10, or an extension thereof, emerge through a hole in the casing 15. Such a solution may be suitable for an auxiliary unit such as a compressor or hydraulic pump.

The type of transmission intended in figure 2 normally comprises three planet wheel shafts, which function in the same way as the planet wheel shaft 10 described. However, the planet wheel shafts may be more than three in number. The presence of a second planet wheel shaft 20 with associated larger planet wheel, smaller planet wheel and bearings is indicated in the figure. Each of the planet wheel shafts forming part of the main gear may drive one or more auxiliary units. As an alternative to what is shown in figure 2, the auxiliary units may be connected to opposite ends of the planet wheel shaft 10, provided that the space inside the internal gear 7 is not too limited. A further alternative is to have auxiliary units connected at both ends of the planet wheel shaft 10. It is also feasible to have the planet wheel shaft 10, or an extension thereof, extending right through the auxiliary unit 12, it being possible to arrange a further auxiliary unit on the same planet wheel shaft.

In a conventional transmission the auxiliary unit transmission is driven from one of the components of the main gear, for example by external toothed gears (not shown) on the internal gear 7. The invention may be combined with any form of auxiliary unit transmission for the operation of auxiliary units that are not driven by any of the planet wheel shafts.

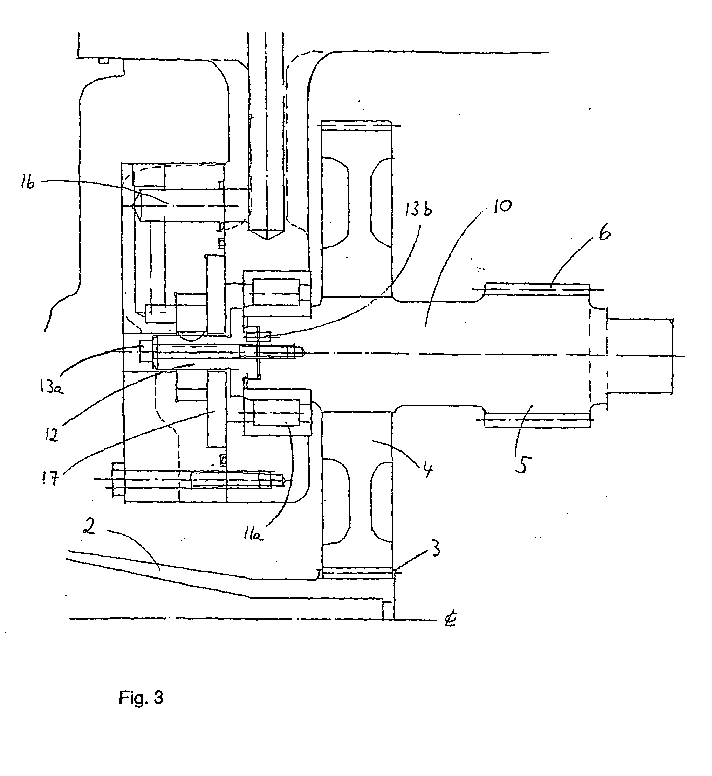

Figure 3 in a more detailed view shows an example of how an auxiliary unit can be arranged in a preferred embodiment of the invention. In the example shown the auxiliary unit 12 consists of an oil pump of "gerotor" type. The oil pump can supply the transmission, gas turbine engine and, where necessary, also the generator with oil. As previously, the input shaft 2 is connected by toothed gears 3 to the larger planet wheel 4. The smaller planet wheel 5 is provided with toothed gears 6 intended to be connected to the internal gear 7 in figure 2 (not shown in figure 3). The larger planet wheel 4 and the smaller planet wheel 5 are seated on the same planet wheel shaft 10, the planet wheel shaft 10 being suspended in the two bearings 11a, 11b in figure 2 (of which only 11a is shown in figure 3). The auxiliary unit 12, in this case an oil pump, is directly connected to the planet wheel shaft 10 via a connecting element (13 in figure 2), which in this case comprises a bolt 13a and a pin 13b. The rotary component in the oil pump therefore constitutes a form of extension of the planet wheel shaft 10, so that no additional toothed gears or bearings are required to drive the oil pump other than the bearings 11a, 11b which still form part of the suspension of the planet wheel shaft 10. The figures also show an example of how the peripheral arrangement such as oil ducts 16 and wear plates 17 can be arranged.

An example of another auxiliary unit which can advantageously be arranged in a similar way to the oil pump in figure 3 is a rotary oil separator.

The invention is not limited to the exemplary embodiments described above, a number of modifications being conceivable within the scope of the following claims. For example, the auxiliary unit may be operatively connected to the planet wheel shaft by some means other than a bolt, by the use of splines or a toothed coupling, for example, or by extending the planet wheel shaft and making it serve also as shaft for the auxiliary unit. If necessary, an individual toothed gear may be used in this connection in order to reduce the speed, for example.

## Claims

1. A gas turbine arrangement comprising a transmission (1) of planetary gear type with fixed planet carrier, and an arrangement for driving one or more auxiliary units (12),
**characterized in that**
at least one of the said auxiliary units (12) is operatively connected to a planet wheel shaft (10) forming part of the transmission (1).

2. The gas turbine arrangement as claimed in claim 1,
**characterized in that**
the auxiliary unit (12) connected to the said planet wheel shaft (10) is connected directly to the said planet wheel shaft (10).

3. The gas turbine arrangement as claimed in claim 1 or 2,
**characterized in that**
the auxiliary unit (12) connected to the said planet wheel shaft (10) is built into the transmission (1).

4. The gas turbine arrangement as claimed in any of the preceding claims,
**characterized in that**
the auxiliary unit (12) connected to the said planet wheel shaft (10) is an oil pump or a rotary oil separator.

5. The gas turbine arrangement as claimed in any of the preceding claims,
**characterized in that**
all auxiliary units (12) driven from the transmission (1) are directly connected to one or more of the planet wheel shafts (10) forming part of the transmission (1).

6. The gas turbine arrangement as claimed in any of the preceding claims,
**characterized in that**
the gas turbine arrangement comprises a generator and is stationarily arranged for the generation of electrical power.

## Patentansprüche

1. Gasturbinenanordnung, die ein Planetenradgetriebe (1) mit einem festen Planetenträger und eine Anordnung zum Antrieb einer oder mehrerer Hilfseinheiten (12) umfasst,
**dadurch gekennzeichnet, dass**
wenigstens eine der Hilfseinheiten (12) wirksam mit einer Planetenradwelle (10) verbunden ist, die ein Teil des Getriebes (1) bildet.

2. Gasturbinenanordnung nach Anspruch 1,
**dadurch gekennzeichnet, dass**
die mit der Planetenradwelle (10) verbundene Hilfseinheit (12) direkt mit der Planetenradwelle (10) verbunden ist.

3. Gasturbinenanordnung nach Anspruch 1 oder 2,
**dadurch gekennzeichnet, dass**
die mit der Planetenradwelle (10) verbundene Hilfseinheit (12) in das Getriebe (1) eingebaut ist.

4. Gasturbinenanordnung nach einem der vorhergehenden Ansprüche,
**dadurch gekennzeichnet, dass**
die mit der Planetenradwelle (10) verbundene Hilfseinheit (12) eine Ölpumpe oder ein Rotationsölabscheider ist.

5. Gasturbinenanordnung nach einem der vorhergehenden Ansprüche,
**dadurch gekennzeichnet, dass**
alle von dem Getriebe (1) angetriebenen Hilfseinheiten (12) direkt mit einer oder mehreren der Planetenradwellen (10) verbunden sind, die ein Teil des Getriebes (1) bilden.

6. Gasturbinenanordnung nach einem der vorhergehenden Ansprüche,
**dadurch gekennzeichnet, dass**
die Gasturbinenanordnung einen Generator umfasst und stationär zur Erzeugung elektrischer Leistung angeordnet ist.

## Revendications

1. Agencement de turbine à gaz comportant une transmission (1) de type à engrenage planétaire ayant un porte-satellites fixe, et un agencement pour entraîner une ou plusieurs unités auxiliaires (12), **caractérisé en ce qu'**au moins une desdites unités auxiliaires (12) est reliée de manière opérationnelle à un axe de roue planétaire (10) formant une partie de la transmission (1).

2. Agencement de turbine à gaz selon la revendication 1, **caractérisé en ce que** l'unité auxiliaire (12) reliée audit axe de roue planétaire (10) est directement reliée audit axe de roue planétaire (10).

3. Agencement de turbine à gaz selon la revendication 1 ou 2, **caractérisé en ce que** l'unité auxiliaire (12) reliée audit axe de roue planétaire (10) est intégrée dans la transmission (1).

4. Agencement de turbine à gaz selon l'une quelconque des revendications précédentes, **caractérisé en ce que** l'unité auxiliaire (12) reliée audit axe de roue planétaire (10) est une pompe à huile ou un séparateur d'huile rotatif.

5. Agencement de turbine à gaz selon l'une quelconque des revendications précédentes, **caractérisé en ce que** toutes les unités auxiliaires (12) entraînées à partir de la transmission (1) sont directement reliées à un ou plusieurs des axes de roue planétaire (10) formant une partie de la transmission (1).

6. Agencement de turbine à gaz selon l'une quelconque des revendications précédentes, **caractérisé en ce que** l'agencement de turbine à gaz comporte un générateur et est agencé de manière stationnaire pour la génération d'un courant électrique.
